# EUROPEAN PATENT APPLICATION

(11) **EP 3 110 036 A1**
(43) Date of publication of application: **28.12.2016**
(21) Application number: 14883265.2
(22) Date of filing: 22.07.2014
(51) Int. Cl.: H04B 10/071, H04B 10/40

(54) **OPTICAL TRANSCEIVER MODULE STRUCTURE, PASSIVE OPTICAL NETWORK SYSTEM AND OPTICAL TRANSMISSION SYSTEM**

(30) Priority: 21.02.2014 CN 201420077585 U
(71) Applicant: ZTE Corporation, Shenzhen, Guangdong 518057 (CN)
(72) Inventor: KUANG, Guohua, Shenzhen Guangdong 518057 (CN); FU, Zhiming, Shenzhen Guangdong 518057 (CN); LI, Kun, Shenzhen Guangdong 518057 (CN); CHEN, Lei, Shenzhen Guangdong 518057 (CN)
(74) Representative: Novagraaf Technologies
(86) International application number: PCT/CN2014/082764
(87) International publication number: WO 2015/123963

(57) **Abstract**

An optical transceiver module structure, a Passive Optical Network (PON) system and an optical transmission system are provided. The optical transceiver module structure includes: a first optical interface, of which one end is connected to a service optical fibre and the other end is connected to an optical functional module; the optical functional module; and a second optical interface, of which one end is connected to a service optical interface of a system board and the other end is connected to the optical functional module. The above technical scheme solves the problem in related art that there is no solution for a unitized, low-cost and miniaturized optical module structure which can be connected to an optical fibre service channel in series and have newly added functions realized by a function unit inside the optical module. The optical transceiver module structure can be connected to an optical fibre path in series without affecting the optical signal transmission of an original service, and can be added with one or more optical functions (for example, Optical Time Domain Reflectometer (OTDR) measurement function).

## Description

### Technical Field

The present disclosure relates to the technical field of communications, and in particular to an optical transceiver module structure, a Passive Optical Network (PON) system and an optical transmission system.

### Background

With the rapid development of optical fibre communication technologies, the large-scale deployment of optical fibre communication networks and the increasing demand for new user functions, how to add new functions to products which have been commercially used is a big challenge operators are facing.

For products which have been commercially used, technical schemes are mature and stable. In addition to cost and maintenance, the newly added function scheme also needs to take into account the smooth upgrade of system.

For example, during optical fibre communication, optical fibre, as a transmission medium, may have a link fault, which thus impacts the transmission of optical signals. An Optical Time Domain Reflectometer (OTDR) function is added to detect and locate a fault in a deployed optical fibre network.

However, in a related art, there is no solution for a unitized, low-cost and miniaturized optical module structure which can be connected to an optical fibre service channel in series and have newly added functions realized by a function unit inside the optical module.

In view of the above problem in the related art, no effective solution has been proposed so far.

### Summary

The embodiments of the present disclosure provide an optical transceiver module structure, a PON system and an optical transmission system, to at least solve the problem in related art that there is no solution for a unitized, low-cost and miniaturized optical module structure which can be connected to an optical fibre service channel in series and have newly added functions realized by a function unit inside the optical module.

According to one embodiment of the present disclosure, an optical transceiver module structure is provided, including: a first optical interface, of which one end is connected to a service optical fibre and the other end is connected to an optical functional module; the optical functional module; and a second optical interface, of which one end is connected to a service optical interface of a system board and the other end is connected to the optical functional module.

In an exemplary embodiment, the optical functional module includes: a laser, which is configured to convert an electrical signal into an optical signal; a multiplexing/demultiplexing component for conducting multiplexing and demultiplexing among optical signal paths, which is configured to realize an optical path connection among the laser, a detector, the first optical interface and the second optical interface; the detector, which is connected with the multiplexing/demultiplexing component and is configured to convert a received optical signal with a specified wavelength into an electrical signal through the multiplexing/demultiplexing component.

In an exemplary embodiment, the optical transceiver module structure further includes: an electrical interface and an electrical functional module which is connected to the optical functional module, wherein the electrical functional module is connected to the system board through the electrical interface.

In an exemplary embodiment, the optical transceiver module structure further includes: a Printed Circuit Board (PCB), wherein the electrical functional module and the electrical interface are arranged on the PCB.

In an exemplary embodiment, the optical transceiver module structure further includes: a housing, wherein the optical functional module and/or the electrical functional module are arranged inside the housing.

In an exemplary embodiment, the housing is moulded by compression.

In an exemplary embodiment, the housing includes an upper cover and a lower cover, which are detachably connected.

In an exemplary embodiment, the first optical interface and the second optical interface both include: a pluggable Square Connector (SC) interface.

According to another embodiment of the present disclosure, a PON system is provided, including: one or more Optical Network Units (ONUs) and an Optical Line Terminal (OLT), and further including: any one optical transceiver module structure described above; wherein one end of the optical transceiver module structure is connected to the OLT through the second optical interface, while the other end is connected to the one or more ONUs through the first optical interface on the service optical fibre.

According to a further embodiment of the present disclosure, an optical transmission system is provided, including: Optical Transport Network (OTN) devices, and further including: any one optical transceiver module structure described above; wherein one end of the optical transceiver module structure is connected to a first OTN device through the second optical interface, while the other end is connected to a second OTN device through the first optical interface on the service optical fibre.

With the embodiments of the present disclosure, by designing an optical transceiver module structure including a first optical interface, a second optical interface and an optical functional module, the embodiments of the present disclosure solve the problem in related art that there is no solution for a unitized, low-cost and miniaturized optical module structure which can be connected to an optical fibre service channel in series and have newly added functions realized by a function unit inside the optical module. The optical transceiver module structure provided in the embodiments of the present disclosure can be connected to an optical fibre path in series without affecting the optical signal transmission of an original service, and can be added with one or more optical functions (for example, OTDR measurement function).

### Brief Description of the Drawings

For a better understanding of the present disclosure, accompanying drawings described hereinafter are provided to constitute one part of the application; the schematic embodiments of the present disclosure and the description thereof are used to illustrate the present disclosure but to limit the present disclosure improperly. In the accompanying drawings:
Fig. 1 is an application block diagram of an optical transceiver module structure according to an embodiment of the present disclosure;
Fig. 2 is another structure diagram of an optical transceiver module structure according to an embodiment of the present disclosure;
Fig. 3 is a composition diagram of an optical transceiver module structure according to an embodiment of the present disclosure;
Fig. 4 is a structure diagram of an optical transceiver module structure according to an exemplary embodiment of the present disclosure;
Fig. 5 is an application architecture diagram of a PON according to an exemplary embodiment of the present disclosure; and
Fig. 6 is an application architecture diagram of an optical transport system according to an exemplary embodiment of the present disclosure.

### Detailed Description of the Embodiments

The present disclosure is described below in detail by reference to the accompanying drawings in conjunction with embodiments. It should be noted that the embodiments in the application and the characteristics of the embodiments can be combined if no conflict is caused.

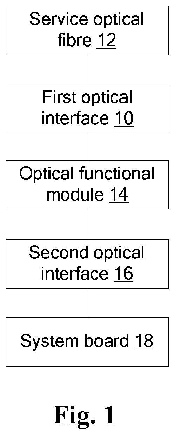

Fig. 1 is an application block diagram of an optical transceiver module structure according to an embodiment of the present disclosure. As shown in Fig. 1, the structure includes:
a first optical interface 10, of which one end is connected to a service optical fibre 12 and the other end is connected to an optical functional module 14;
the optical functional module 14, which may be any optical functional module for realizing various functions, for example, optical transmitting module, optical receiving module, optical transceiver module, optical transponder module, and specifically in an exemplary implementation of this embodiment may be an OTDR functional module;
a second optical interface 16, of which one end is connected to a service optical interface of a system board 18 and the other end is connected to the optical functional module 14.

With the above technical scheme, the embodiment of the present disclosure can solve the problem in related art that there is no solution for a unitized, low-cost and miniaturized optical module structure which can be connected to an optical fibre service channel in series and have newly added functions realized by a function unit inside the optical module. The optical transceiver module structure provided in the embodiment of the present disclosure can be connected to an optical fibre path in series without affecting the optical signal transmission of an original service, and can be added with one or more optical functions (for example, OTDR measurement function).

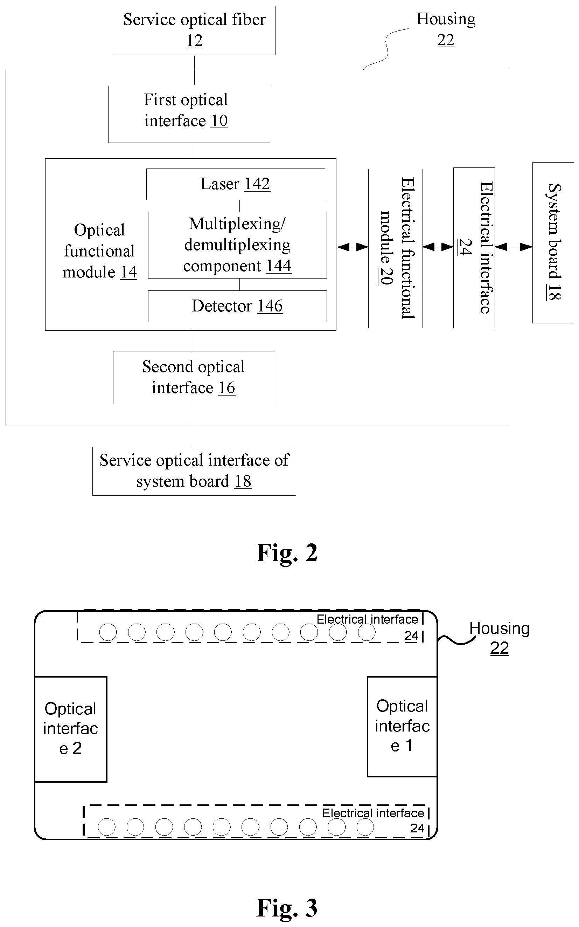

Optionally, as shown in Fig. 2, the optical functional module 14 may further include:
a laser 142, which is configured to convert an electrical signal into an optical signal; in an exemplary implementation of this embodiment, the laser 142 may generate and emit a testing optical signal for OTDR measurement;
a multiplexing/demultiplexing component 144 for conducting multiplexing and demultiplexing among optical signal paths, which is configured to realize an optical path connection among the laser 142, a detector 146, the first optical interface 10 and the second optical interface 16;
the detector 146, which is connected with the multiplexing/demultiplexing component 144 and is configured to convert a received optical signal with a specified wavelength into an electrical signal through the multiplexing/demultiplexing component 144.

The embodiment of the present disclosure makes a further improvement on the above technical scheme, as shown in Fig. 2, the optical transceiver module structure may further include: an electrical functional module 20, an electrical interface 24 and a PCB 26 (not shown in Fig. 2), wherein the electrical functional module 20 is connected to the system board 18 through the electrical interface 24; the optical functional module 14 and/or electrical functional module 20 and the electrical interface 24 may be arranged on the PCB 26. The electrical functional module 20 may be connected, through the electrical interface, to the system board 18 and the optical functional module 14.

During specific implementation, the first optical interface 10 and the second optical interface 16 both may include but not limited to: a pluggable Square Connector (SC) interface.

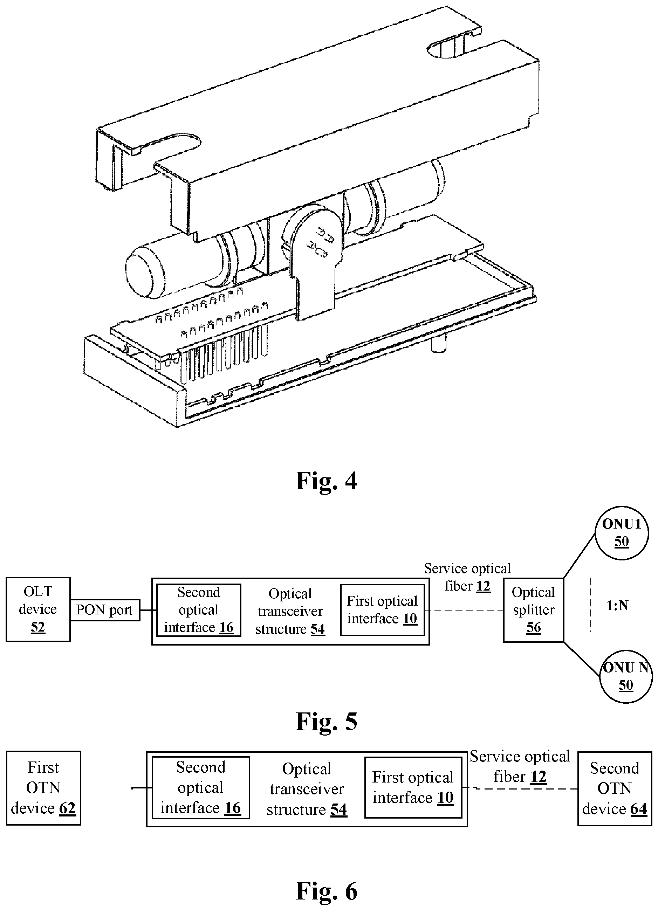

It should be noted that, to realize a dustproof and electrostatic prevention function for the optical transceiver module structure provided in the embodiments of the present disclosure, this embodiment may further include a housing 22, as shown in Fig. 3. Specifically, as shown in Fig. 4, the housing 22 may include an upper cover 220 and a lower cover 222, wherein the optical functional module 14 and/or the electrical functional module 20 are arranged inside the housing 22. The housing 22 may be moulded by compression of sheet metal, to realize a dustproof and electrostatic prevention function for the optical transceiver module structure and provide mechanical protections for the optical functional module 14 and the PCB. The upper cover 220 and the lower cover 222 may be detachably connected.

To better understand the interaction between the optical interface and the electrical interface in the embodiment of the present disclosure, as shown in Fig. 3 which is a composition diagram of an optical transceiver module structure according to an embodiment of the present disclosure, the optical transceiver module structure includes:
an optical interface 1 (equivalent to the first optical interface 10 in the above embodiment) and an optical interface 2 (equivalent to the second optical interface 16 in the above embodiment), which are the optical interfaces of the optical transceiver module (that is, optical transceiver module structure), serving as an optical signal input interface and an optical signal output interface respectively. The optical transceiver module structure is connected on the optical fibre service channel in series through the above optical interfaces. The embodiment of the present disclosure preferably adopts an SC optical interface.

An electrical functional module 20 (not shown in Fig. 3) and an electrical interface 24, through which the optical transceiver module structure is connected to the system board, wherein this embodiment preferably adopts SFF 2*10 electrical interfaces, of which the external mechanical size of the pin header accords with the 2*10 section in Small Form Factor Transceiver Multisource Agreement (SFF MSA).

The optical transceiver module structure includes an optical interface (a first optical interface 10 and a second optical interface 16) and an electrical interface 24, wherein the optical interface is connected in an optical fibre network in series to realize the transmission of optical signals in the optical fibre network, and the electrical interface 24 realizes the connection of electrical signals between the optical transceiver module structure and the system board.

Fig. 4 is a structure diagram of an optical transceiver module structure according to an embodiment of the present disclosure. As shown in Fig. 4, the main architecture of the optical transceiver module structure is shown in Fig. 4, specifically, the optical transceiver module structure includes: an upper cover 220, a lower cover 222, a PCB 26, an optical device 40 (equivalent to the optical functional module 14), an electrical functional module 20 (not shown in Fig. 4) and an electrical interface 24 (the electrical functional module 20 and the electrical interface 24 may be integrated). It should be noted that in this embodiment all parts involving an optical signal can be called an optical device 40. Optionally, the optical device 40 may specifically include a first optical interface 10, a second optical interface 16 and an optical functional module 14, wherein the optical functional module 14 during specific implementation may include: a multiplexing/demultiplexing component 144, a laser (specifically embodied as a laser in this embodiment) 142 and a detector 146 (not shown in Fig. 4). The optical device 40 is configured to realize an input interface and an output interface for service optical signals, and the emission and detection of detection optical signals. The laser 142 emits a testing optical signal after receiving an instruction from a detection system, and outputs the testing optical signal to the service optical fibre 12 through the above multiplexing/demultiplexing component 144. A received testing optical signal returned from the service optical fibre is separated from the service optical signal at the multiplexing/demultiplexing component 144 after passing through the first optical interface 10, and then is received and converted into an electrical signal by the detector 146.

The PCB 26 is configured to connect to the optical device 40 to conduct conversion between optical signals and electrical signals. The PCB board is further configured to connect to the electrical interface, to provide an electrical signal connection channel between the optical module and the system board.

The electrical interface 24 is configured to connect the optical transceiver module structure and the detection system. This embodiment preferably adopts SFF 2*10 electrical interfaces, of which the external mechanical size of the pin header accords with the 2*10 section in SFF MSA.

The object of the embodiments of the present disclosure can be summarized as: the optical transceiver module structure, which has an optical signal input interface (equivalent to the first optical interface 10 and/or the second optical interface 16), an optical signal output interface (equivalent to the first optical interface 10 and/or the second optical interface 16) and a newly added optical signal coupling path, can be connected to the original optical service channel in series. It is only needed to insert the corresponding functional module, for example, optical transceiver module structure, into any one of the OLT and the ONUs in the PON in series through the SC optical interfaces at two ends, to realize corresponding detection functions without affecting the transmission of service optical signals.

To better understand the implementation process of the optical transceiver device provided by the embodiment of the present disclosure in the optical fibre channel, the following embodiments of the present disclosure further provide a passive optical fibre system and an optical transmission system.

Fig. 5 is an architecture diagram of a PON according to an embodiment of the present disclosure. As shown in Fig. 5, the passive optical fibre system includes: ONUs 50, an OLT 52 and an optical transceiver module structure 54 described above. Here, PON shown in Fig. 5 refers to Passive Optical Network.

In the PON system, one end of the optical transceiver module structure 54 is connected to the OLT 52 through the second optical interface 16, while the other end is connected to the ONUs 50 through the first optical interface 10 on the service optical fibre 12.

In this embodiment, the first optical interface of the OTDR optical transceiver module structure is connected to the optical fibre at the output end of the OLT, the first optical interface is connected to one end of the service optical fibre network, wherein an optical splitter and a plurality of ONUs connected with the optical splitter are arranged in the service optical fibre network. The part between the optical splitter and the OLT device is called a trunk optical fibre, while the part between the optical splitter and the ONU is called a tributary optical fibre. Service signals are bidirectionally transmitted through the first optical module and the second optical module in the above optical module. OTDR testing optical signals are transmitted to the service optical fibre network through the first optical interface, so that the detection on the trunk optical fibre and the tributary optical fibre at the ONU end can be completed.

Fig. 6 is an architecture diagram of an optical transport system according to an embodiment of the present disclosure. As shown in Fig. 6, the optical transport system includes OTN devices, and further includes an optical transceiver module structure 54 described above.

In the above optical transport system, one end of the optical transceiver module structure 54 is connected to a first OTN device 62 through the second optical interface 16, while the other end is connected to a second OTN device 64 through the first optical interface 10 on the service optical fibre 12.

In this embodiment, the OTDR optical transceiver module structure is connected between the OTN devices. Specifically, the first optical interface 10 of the OTDR optical transceiver module is connected to an OTN device optical fibre at one end, while the second optical interface 16 is connected to a service optical fibre 12. Service signals are bidirectionally transmitted through the first optical interface 10 and the second optical interface 16 of the above optical module. Testing optical signals are sent to the service optical fibre through the optical interface 1, thereby completing the detection of optical fibre in the OTN network.

It should be noted that the "first" and "second" mentioned in the above embodiment are only to distinguish optical interfaces, but to limit the application and function of the optical interfaces.

To sum up, the embodiments of the present disclosure provide a unitized, low-cost and miniaturized optical transceiver module structure, which can be connected to an optical fibre service channel in series, can be connected to an optical fibre path in series without affecting the optical signal transmission of an original service, and can be added with an optical transceiving function (for example, the OTDR measurement function mentioned in the embodiment).

The above are only the exemplary embodiments of the present disclosure and not intended to limit the present disclosure. For those skilled in the art, various modifications and changes can be made to the present disclosure. Any modification, equivalent substitute and improvement made within the principle of the present disclosure are intended to be included within the scope of protection defined by the appended claims of the present disclosure.

### Industrial Applicability

The above technical scheme provided by the embodiments of the present disclosure can be applied to an optical transceiver module structure. By designing an optical transceiver module structure including a first optical interface, a second optical interface and an optical functional module, the technical scheme solves the problem in related art that there is no solution for a unitized, low-cost and miniaturized optical module structure which can be connected to an optical fibre service channel in series and have newly added functions realized by a function unit inside the optical module. The optical transceiver module structure provided in the embodiments of the present disclosure can be connected to an optical fibre path in series without affecting the optical signal transmission of an original service, and can be added with one or more optical functions (for example, OTDR measurement function).

## Claims

1. An optical transceiver module structure, comprising:
a first optical interface, of which one end is connected to a service optical fibre and the other end is connected to an optical functional module;
the optical functional module; and
a second optical interface, of which one end is connected to a service optical interface of a system board and the other end is connected to the optical functional module.

2. The optical transceiver module structure as claimed in claim 1, wherein the optical functional module comprises:
a laser, which is configured to convert an electrical signal into an optical signal;
a multiplexing/demultiplexing component for conducting multiplexing and demultiplexing among optical signal paths, which is configured to realize an optical path connection among the laser, a detector, the first optical interface and the second optical interface;
the detector, which is connected with the multiplexing/demultiplexing component and is configured to convert a received optical signal with a specified wavelength into an electrical signal through the multiplexing/demultiplexing component.

3. The optical transceiver module structure as claimed in claim 1, further comprising: an electrical interface and an electrical functional module which is connected to the optical functional module, wherein the electrical functional module is connected to the system board through the electrical interface.

4. The optical transceiver module structure as claimed in claim 3, further comprising: a Printed Circuit Board, PCB, wherein the electrical functional module and the electrical interface are arranged on the PCB.

5. The optical transceiver module structure as claimed in claim 3, further comprising: a housing, wherein the optical functional module and/or the electrical functional module are arranged inside the housing.

6. The optical transceiver module structure as claimed in claim 5, wherein the housing is moulded by compression.

7. The optical transceiver module structure as claimed in claim 5 or 6, wherein the housing comprises an upper cover and a lower cover, which are detachably connected.

8. The optical transceiver module structure as claimed in any one of claims 1 to 6, wherein the first optical interface and the second optical interface both comprise: a pluggable Square Connector, SC, interface.

9. A Passive Optical Network, PON, system, comprising: one or more Optical Network Units, ONUs, and an Optical Line Terminal, OLT, and further comprising: an optical transceiver module structure as claimed in any one of claims 1 to 8;
wherein one end of the optical transceiver module structure is connected to the OLT through the second optical interface, while the other end is connected to the one or more ONUs through the first optical interface on the service optical fibre.

10. An optical transmission system, comprising Optical Transport Network, OTN, devices, and further comprising an optical transceiver module structure as claimed in any one of claims 1 to 8;
wherein one end of the optical transceiver module structure is connected to a first OTN device through the second optical interface, while the other end is connected to a second OTN device through the first optical interface on the service optical fibre.
